# EUROPEAN PATENT APPLICATION

(11) **EP 1 875 955 A1**
(43) Date of publication of application: **09.01.2008**
(21) Application number: 06714421.2
(22) Date of filing: 23.02.2006
(51) Int. Cl.: B01D 63/02, B01D 63/00

(54) **HOLLOW FIBER MEMBRANE MODULE AND METHOD OF MANUFACTURING THE SAME**

(30) Priority: 13.04.2005 JP 2005115519
(71) Applicant: NOK Corporation, Minato-ku Tokyo 105-8585 (JP)
(72) Inventor: HAYASHI, Takahiro, c/o NOK Corporation, Fujisawa-shi, Kanagawa 251-0042 (JP)
(74) Representative: TBK-Patent
(86) International application number: PCT/JP2006/303281
(87) International publication number: WO 2006/112142

(57) **Abstract**

The structure can be made simple, and the reuse of a housing can be attained.

A hollow fiber membrane module 100 including a hollow fiber membrane unit 10 which has plural hollow fiber membranes 11, and a first seal-fixing section 12 and a second seal-fixing section 13 for seal-fixing both ends of these hollow fiber membranes 11 to make the insides of the hollows therein open, and which is constructed in a state that outer wall faces of these seal-fixing sections are uncovered, and a housing 20 for containing the hollow fiber membrane unit 10, wherein the housing 20 has first ports 22a and 23a constituting a channel leading to the insides of the hollows in the hollow fiber membranes 11, and second ports 21a and 21b constituting a channel leading to the side of outer wall faces of the hollow fiber membranes 11, and the hollow fiber membrane unit 10 is constructed to be freely put on and taken off from the housing 22.

## Description

### BACKGROUND OF THE INVENTION

### 1. Field of the Invention

The present invention relates to a hollow fiber membrane module having plural hollow fiber membranes, and a method for producing the hollow fiber membrane module.

### 2. Description of the Related Art

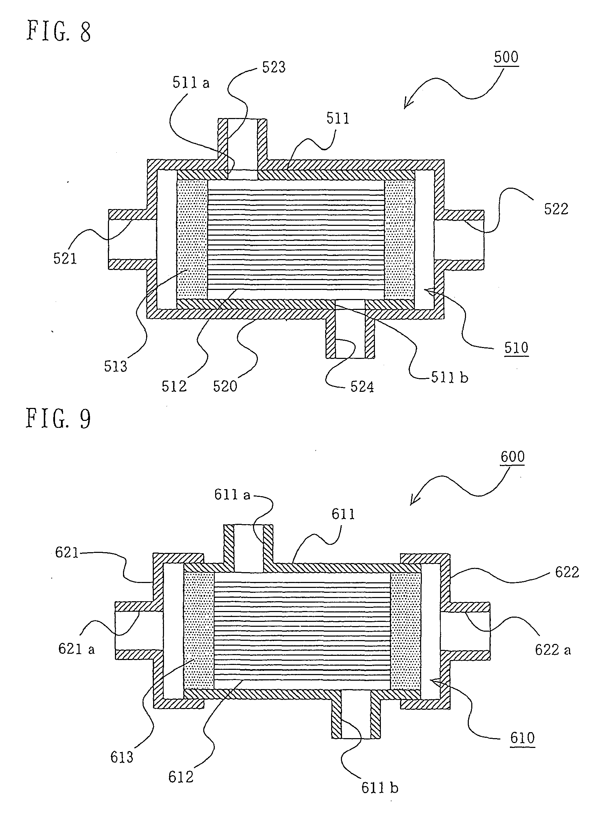

About separating devices for separating water vapor or impurities from a fluid, such as humidifiers, dehumidifiers, or filter units, known are devices using a hollow fiber membrane module. With reference to FIGS. 8 and 9, two typical examples of hollow fiber membrane modules in the conventional art will be described. FIGS. 8 and 9 are each a schematic sectional view of a hollow fiber membrane module in the conventional art.

First, the hollow fiber membrane module illustrated in FIG. 8 is described. The illustrated hollow fiber membrane module 500 is equipped with a module body 510 and a housing 520. The module body 510 has a case 511, plural hollow fiber membranes 512 contained in the case 511, and seal-fixing sections (potting sections) 513 for seal-fixing the hollow fiber membranes 512 to each other and seal-fixing the membranes and inner wall faces of the case 511 at both ends of a hollow fiber membrane bundle made of the hollow fiber membranes 512, so as to make the insides of the hollows open. In the housing 520, first ports 521 and 522 are provided which constitute a channel leading to the insides of the hollows in the hollow fiber membranes 512. In the case 511 and the housing 520, second ports 511a, 511b, 523 and 534 are provided which constitute a channel leading to the side of outer wall faces of the hollow fiber membrane 512.

Next, the hollow fiber membrane module illustrated in FIG. 9 is described. The illustrated hollow fiber membrane module 600 is equipped with a module body 610, and a pair of heads 621 and 622. The module body 610 has a case 611, plural hollow fiber membranes 612 contained in the case 611, and seal-fixing sections (potting sections) 613 for seal-fixing the hollow fiber membranes 612 to each other and seal-fixing the membranes and inner wall faces of the case 611 at both ends of a hollow fiber membrane bundle made of the hollow fiber membranes 612, so as to make the insides of the hollows open. In the pair of the heads 621 and 622, first ports 621a and 622a are provided which constitute a channel leading to the insides of the hollows in the hollow fiber membrane 612. In the case 611, second ports 611a and 611b are provided which constitute a channel leading to the side of outer wall faces of the hollow fiber membranes 612.

The following will describe the reason why in hollow fiber membrane modules in the conventional art a housing or heads are necessary apart from a case for containing hollow fiber membranes. As described above, at both ends of a hollow fiber membrane bundle, hollow fiber membranes are seal-fixed to each other to make the insides of the hollows open. The production step of forming such seal-fixing sections is described herein. First, a hollow fiber membrane bundle is incorporated into a case. This case is constructed to cover ends of the hollow fiber membrane bundle. Next, a seal-fixing material (such as an epoxy resin) in a liquid form is filled into the vicinity of the ends of the hollow fiber membrane bundle inside the case. The filled seal-fixing material is hardened, and subsequently the hardened seal-fixing material is cut together with the case. In such a way, the seal-fixing sections are provided, wherein the insides of the hollows are made open and the hollow fiber membranes are seal-fixed to each other.

As described above, when the hardened seal-fixing material is cut together with the case, the seal-fixing sections are formed. Accordingly, at each of the ends of the module body, an end face of the case and an end face of one of the seal-fixing sections become the same face, and further the insides of the follows in the hollow fiber membranes are made open to the end face of the seal-fixing section. For this reason, the ends of the module body cannot be used, as they are, as ports for conducting a fluid into the hollows in the hollow fiber membranes. It is therefore necessary to set a means for collecting the fluid into the vicinities of the ends of the module body. Thus, as illustrated in FIG. 8, the housing 520 is separately set up, or as illustrated in FIG. 9, the pair of the heads 621 and 622 are separately set up.

The case 511 illustrated in FIG. 8 and the case 611 illustrated in FIG. 9 are each made of an engineering plastic or a metal. In the case of the former, the case is formed by injection molding using a mold, or cutting work of a raw material. In the case of the latter, the case is formed by cutting work of a raw material. In the case of the injection molding, costs for the mold are high; in the case of the cutting work, costs for the raw material and the work are high. In either case, these matters are large barriers against a decrease in costs. In particular, in the case of using a hollow fiber membrane module as a humidifier in a fuel cell, costs for making a case therefor become high since the size of the hollow fiber membrane module is large. As the raw material of the case, an engineering plastic is used in many cases. The case is usually formed by cutting work since the size of the case is large. In this case, costs are high as described above, and additionally the size or the shape of the case is actually restricted by the size or the shape of a round rod, a plate or the like that is a starting member of the raw material in many cases.

Since the seal-fixing material is bonded to the above-mentioned case, the case is required to have adhesiveness to the material. In order that the bonded faces of the seal-fixing material and the case will not be peeled by a change in temperature of the environment, the linear expansion coefficients of the two are required to be close to each other. Furthermore, the case is partially cut after the seal-fixing material is hardened; therefore, the case is required to have a large cuttability. On the basis of the above matters, the latitude from which the case material is selected is narrow.

Moreover, the case is partially cut in the production step thereof, as described above.
Accordingly, in the case that the hollow fiber membranes therein deteriorate so that an exchange of the hollow fiber membrane module is required, the case cannot be reused.
Patent Document 1: Japanese Patent Application Laid-Open No. 2003-265933
Patent Document 2: JP-A No. 2003-240284
Patent Document 3: JP-A No. 2001-201120

### SUMMARY OF THE INVENTION

An object of the present invention is to provide a hollow fiber membrane module making it possible to make the structure thereof simple and further attain the reuse of a housing therefor, and a method for producing the hollow fiber membrane module.

In the present invention, the following means are adopted to solve the above-mentioned problems.

Accordingly, the hollowfibermembranemodule of the invention includes: a hollow fiber membrane unit which has plural hollow fiber membranes, and a seal-fixing section for seal-fixing both ends of the hollow fiber membranes to make the insides of the hollows therein open, and which is constructed in a state that an outer wall face of the seal-fixing section is uncovered, and
a housing for containing the hollow fiber membrane unit,
wherein the housing has a first port constituting a channel leading to the insides of the hollows in the hollow fiber membranes, and a second port constituting a channel leading to the side of an outer wall face of the hollow fiber membranes, and
the hollow fiber membrane unit is constructed to be able to put on and taken off from the housing.

According to this structure, the hollow fiber membrane unit, which is constructed in a state that the outer wall face of the seal-fixing section is uncovered, is put in the housing, which has the first port constituting the channel leading to the insides of the hollows in the hollow fiber membranes and the second port constituting the channel leading to the side of the outer wall face of the hollow fiber membranes. It is therefore unnecessary to set up a means for conducting a fluid into the hollows in the hollow fiber membranes separately. As a result, it is unnecessary to set a case or a head besides the housing for containing the hollow fiber membranes. Moreover, the hollow fiber membrane unit is constructed to be freely put on and taken off from the housing; therefore, when the hollow fiber membrane unit deteriorates, it is sufficient that only the hollow fiber membrane unit is exchanged. Thus, the housing can be reused. Furthermore, no adhesive agent is bonded to the housing; therefore, it is unnecessary to consider any adhesiveness in order to select the material of the housing. When the invention is compared with any case inwhich an adhesive agent is bonded, it is also sufficient that the linear expansion coefficient of the housing is far less considered.

The seal-fixing section is preferably fitted into the internal circumference of the housing, so as to be fixed.

It is also preferred that the housing has a body section having an outward flange, and a cap having an outward flange,
the seal-fixing section has an outward flange sandwiched between the outward flange of the body section and the outward flange of the cap, and
the individual outward flanges in the body section, the seal-fixing section, and the cap are fixed to each other with a screw.

It is preferred that the shape of the housing is substantially rectangularly parallelepipedic,
an input and an outlet constituting the first port are provided in a pair of opposite faces of the housing, respectively, and further an input and an outlet constituting the second port are provided in a pair of other opposite faces of the housing, which are different from the faces in which the first port is provided, respectively.

The method of the invention for producing a hollow fiber membrane module, includes:
the step of making plural hollow fiber membranes into a bundle, and fitting ends of the hollow fiber membrane bundle to a jig for covering the ends,
the step of pouring a liquid resin material into the jig,
the step of taking out the hollow fiber membrane bundle from the jig after the resin material is hardened,
the step of cutting the hardened resin material of the hollow fiber membrane bundle partially, thereby forming a hollow fiber membrane unit having a seal-fixing section for seal-fixing the hollow fiber membranes to each other while making the inside of the hollow in each of the hollow fiber membranes open, and
the step of putting the hollow fiber membrane unit into a housing in which the hollow fiber membrane unit is constructed to be freely put on and taken off from the housing having a first port for constituting a channel leading to the insides of the hollows in the hollow fiber membranes, and a second port for constituting a channel leading to the side of an outer wall face of the hollow fiber membranes.

According to the above-mentioned production method, it is possible to produce a hollow fiber membrane module which is not required to be equipped with a case or a head besides the housing for containing the hollow fiber membranes.

It is preferred that the jig has a lid for making a part of the ends of the hollow fiber membrane bundle uncovered, and after the resin material is hardened, the lid is taken off, thereby pushing the end of the uncovered hollow fiber membrane bundle, thereby taking off the hollow fiber membrane bundle from the jig.

This manner makes it possible to take off from the hollow fiber membrane bundle from the jig without acting any tensile stress onto the hollow fiber membranes.

The above-mentioned individual structures may be combined with each other as much as possible.

As described above, according to the invention, the structure can be made simple. Moreover, the housing can be reused.

### DESCRIPTION OF THE PREFERRED EMBODIMENT

With reference to the drawings, a best mode for carrying out this invention will be illustratively described in detail on the basis of an example. However, the scope of the invention should not be interpreted to be limited to the sizes, the materials, the shapes, the relative arrangement and others of the constituting parts described in the example unless otherwise specified.

### Example 1

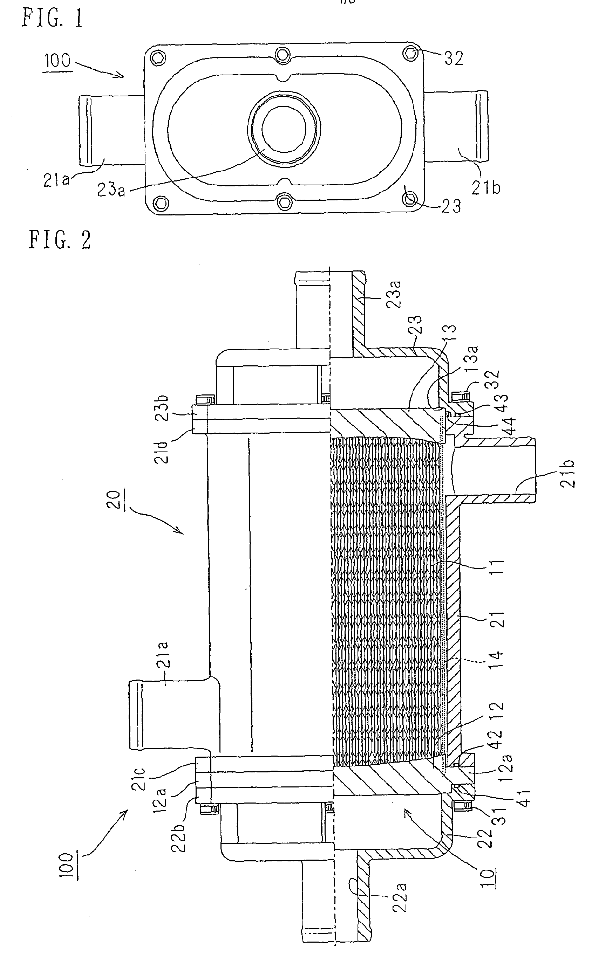

With reference to FIGS. 1 to 7, a hollow fiber membrane module and a method for producing the hollow fiber membrane module according to the example of the invention will be described.

### <Hollow Fiber Membrane Module>

With reference to FIGS. 1 and 2, the hollow fiber membrane module according to the example of the invention is described. FIG. 1 is a plan view of the hollow fiber membrane module according to the example of the invention. FIG. 2 is a partially cutaway sectional view of the hollow fiber membrane module according to the embodiment of the invention when the module is viewed from the front thereof. In FIG. 2, the upper half is a front view, and the lower half is a sectional view.

The hollow fiber membrane module 100 according to the present example is composed of a hollow fiber membrane unit 10, and a housing 20 in which the hollow fiber membrane unit 10 is put. The hollow fiber membrane unit 10 is constructed to be freely put on and taken off from the housing 20.

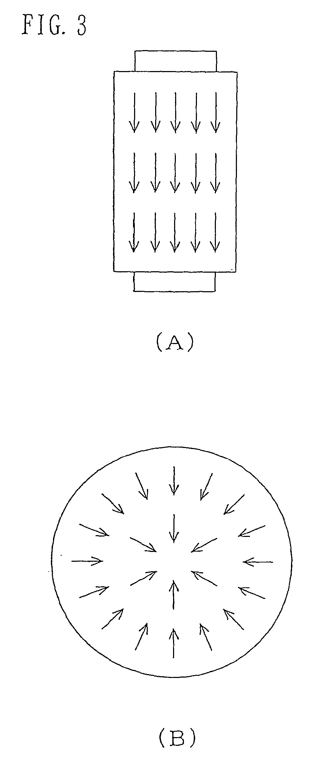

The hollow fiber membrane unit 10 has plural hollow fiber membranes 11, a mesh 14 wound around a hollow fiber membrane bundle made of the hollow fiber membranes 11, and a first seal-fixing section (potting section) 12 and a second seal-fixing section 13 for seal-fixing the hollow fiber membranes 11 to each other at both ends of the hollow fiber membrane bundle to make the insides of the hollows open. An outward flange 12a having plural (six) screw holes 12b (see FIG. 3) is formed in the first seal-fixing section 12. In the second seal-fixing section 13, a step 13a is provided at an end portion thereof.

The housing 20 is made of a metal such as stainless steel, and has a body section 21, and a first cap 22 and a second cap 23 formed at both ends thereof, respectively. The body section 21 is constituted by a cylindrical member, the hollow inside of which is substantially rectangularly parallelepipedic. The body section 21 has second ports 21a and 21b for constituting a channel leading to the side of outer wall faces of the hollow fiber membranes 11. These second ports 21a and 21b each have a cylindrical shape. Furthermore, the body section 21 has, at both ends thereof, outward flanges 21c and 21d each having plural (six) screw holes (not illustrated). The first cap 22 has a first port 22a constituting a channel leading to the insides of the hollows in the hollow fiber membranes 11, and an outward flange 22b having plural (six) screw holes (not illustrated). In the same manner, the second cap 23 has a first port 23a constituting a channel leading to the insides of the hollows in the hollow fiber membranes 11, and an outward flange 23b having plural (six) screw holes (not illustrated). The first ports 22a and 23a each have a cylindrical shape.

The shape of the whole of the housing 20 having the above-mentioned structure is substantially rectangularlyparallelepipedic. The first ports 22a and 23a are provided in a pair of opposite faces, out of the six faces, respectively. One of these first ports 22a and 23a is used as an inlet, and the other is used as an outlet. Second ports 21a and 21b are provided in a pair of other opposite faces, out of the six faces, respectively. One of these second ports 21a and 21b is used as an inlet, and the other is used as an outlet.

The following will describe a state that the hollow fiber membrane unit 10 is put in the housing 20.

The outward flange 12a of the first seal-fixing section 12, which is formed at the side of one end of the hollow fiber membrane unit 10, is sandwiched between the outward flange 21c formed at the body section 21 of the housing 20 and the outward flange 22b formed at the first cap 22. At this time, the flanges are constructed in such a manner that the (six) screw holes provided in one of the outward flanges are consistent with those provided in each of the other outward flanges. Screws 31 are inserted into these screw holes, thereby fixing the side of the one end of the hollow fiber membrane unit 10 to the body section 21 and the first cap 22. Seal rings 41 and 42 are fitted into the gap between the outward flange 12a of the first seal-fixing section 12 and the outward flange 22b of the first cap 22 and the gap between the outward flange 12a of the first seal-fixing section 12 and the outward flange 21c of the body section 21, respectively.

The second seal-fixing section 13 formed at the side of the other end of the hollow fiber membrane unit 10 is fitted into the housing 20 so as to engage the step 13a provided in the end portion of the section 13 into a step formed by the body section 21 and the second cap 23. The outward flange 21d formed at the body section 21 and the outward flange 23b formed at the second cap 23 are put on top of each other. At this time, the flanges are constructed in such a manner that the (six) screw holes provided in one of the outward flanges are consistent with those provided in the other outward flange. The screws 32 are inserted into these screw holes, thereby fixing the side of the other end of the hollow fiber membrane unit 10 to the body section 21 and the second cap 23. Seal rings 43 and 44 are fitted into the gap between the second seal-fixing section 13 of the hollow fiber membrane unit 10 and the body section 21, and the gap between the outward flange 21d of the body section 21 and the outward flange 23b of the second cap 23, respectively.

According to the above-mentioned structure, the following channels are formed: a channel passing through the first port 22a provided in the first cap 22, the insides of the hollows in the individual hollow fiber membranes 11 in the hollow fiber membrane unit 10, and the first port 23a provided in the second cap 23; and a channel passing through the second port 21a provided in the body section 21, the side of the outer wall faces of the individual hollow fiber membranes 11 in the hollow fiber membrane unit 10, and the second port 21b provided in the body section 21. As described above, the seal rings 41, 42, 43 and 44 are set up, thereby preventing the generation of leakage of a fluid between the individual channels.

When all of the screws 31 and 32 are removed to take off the first cap 22 and the second cap 23 from the body section 21, the hollow fiber membrane unit 10 can easily be pulled out from the body section 21. In short, the hollow fiber membrane unit 10 can easily be pulled out from the housing 20.

### <Examples of Use of the Hollow Fiber Membrane Module>

When a hydrophilic material is used as the material of the hollow fiber membranes 11 and fluids having different humidities are caused to flow into one of the channels and the other thereof, respectively, water content permeates from the side higher in humidity, through membranes out of the hollow fiber membranes 11, so as to shift to the side lower inhumidity. Accordingly, the hollow fiber membrane module 100 can be used as a humidifier or dehumidifier. The module can be preferably used as, for example, a humidifier for keeping an ion exchange membrane in a fuel cell in a wet state. The hollow fiber membrane module 100 can also be used as a device for removing alien substances from a liquid (for example, a water purifier) through the so-called cross flow filtration.

### <Advantages of the Hollow Fiber Membrane Module According to the Example>

According to the hollow fiber membrane module according to the present example, the hollow fiber membrane unit 10, which is constructed in a state that the outer wall face of the first seal-fixing section 12 and the outer wall face of the second seal-fixing section 13 are uncovered, is contained in the housing 20, which has the first ports 22a and 23a constituting the channel leading to the insides of the hollows in the hollow fiber membranes 11 and the secondports 21a and 21b constituting the channel leading to the side of the outer wall faces of the hollow fiber membranes 11. It is therefore unnecessary to set up separately any means for conducting a fluid into the hollows in the hollow fiber membranes. As a result, it is unnecessary to set up a case or a head besides the housing 20.

The above-mentioned matter makes a case and a head required in the conventional art unnecessary to make the structure simple and decrease costs. In particular, when the hollow fiber membrane module is used as a humidifier in a fuel cell, the size of the hollow fiber membrane module becomes large; thus, when a case and a head become unnecessary, costs can be largely decreased. The function of the hollow fiber membrane module is unchanged from that of the conventional art; thus, the quality thereof does not fall. Moreover, no case is necessary; thus, the module also has an advantage that the flexibility in design widens since a conventional restriction imposed by the size or the shape of the material of a case is not imposed. The housing 20 used in the present example is produced separately from the hollow fiber membranes 11 or the hollow fiber membrane unit 10, and is produced by, for example, sheet metal working. Thus, it does not occur that the size or the shape of the housing is restricted as in any case in the conventional art.

The hollow fiber membrane unit 10 is constructed to be freely put on and taken off from the housing 20; therefore, when the hollow fiber membrane unit 10 deteriorates, it is sufficient to exchange only the hollow fiber membrane unit 10. Thus, the housing 20, which is expensive, can be reused. Additionally, in order to select the material of the housing 20, it is unnecessary to consider the adhesive property thereof since an adhesive agent such as epoxy material is not bonded to the housing 20. Furthermore, the linear expansion coefficient of the housing 20 may be far less considered when the invention is compared with the case that an adhesive is bonded thereto.

Furthermore, the shape of the housing 20 is rectangularly parallelepipedic; therefore, the invention has an advantage that when the invention is compared with the case that the housing is cylindrical, the whole of the hollow fiber membranes in the housing 20 are more effectively used. This makes it possible to improve the humidifying efficiency, the dehumidifying efficiency, the purifying efficiency, or the like. About this point, a brief description is provided herein with reference to FIGS. 3. FIGS. 3 are each a view which schematically illustrates the flowing manner of a fluid in the housing (the flowing manner of the fluid in a cross section, which is obtained by cutting the hollow fiber membranes transversely) . FIG. 3 (A) illustrates a case wherein the housing is rectangularly parallelepipedic, and FIG. 3 (B) illustrates a case wherein the housing is cylindrical. When the housing is rectangularly parallelepipedic, the fluid is easily caused to flow evenly into the whole of the inside of the housing. On the other hand, when the housing is cylindrical, the fluid is not easily caused to flow into the vicinity of the center of the hollow fiber membrane bundle so that the flow of the fluid tends to become uneven. Accordingly, the whole of the hollow fiber membranes can be more effectively used by making the shape of the housing substantially rectangularly parallelepipedic than by making the shape cylindrical.

### <Method for Producing the Hollow Fiber Membrane Module>

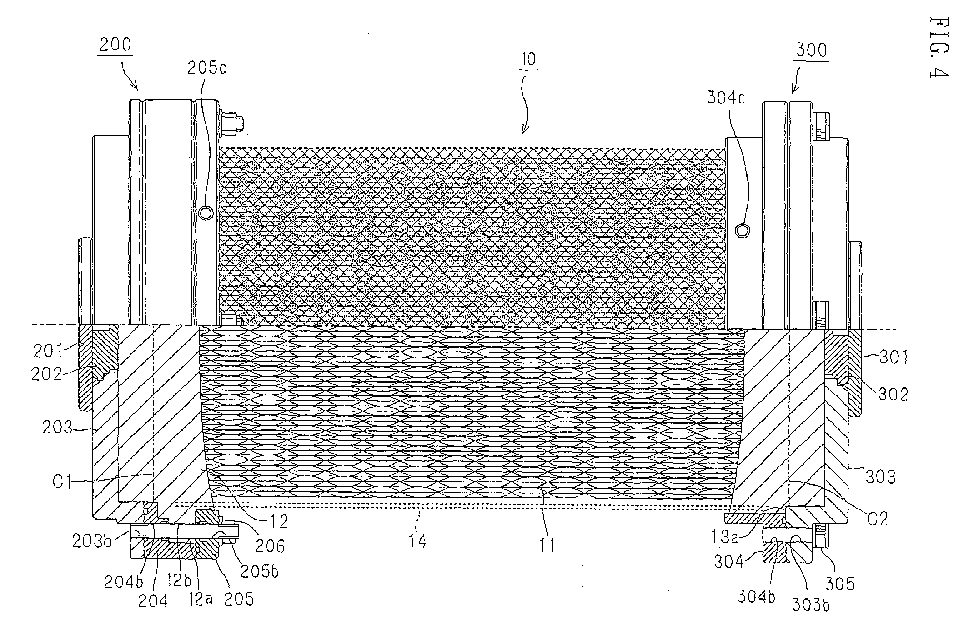

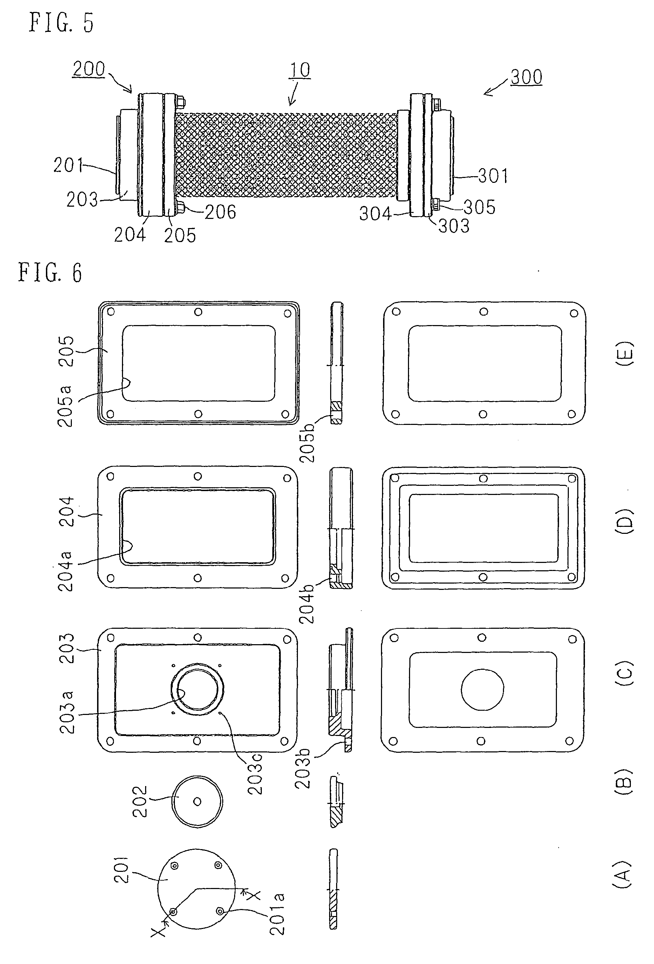

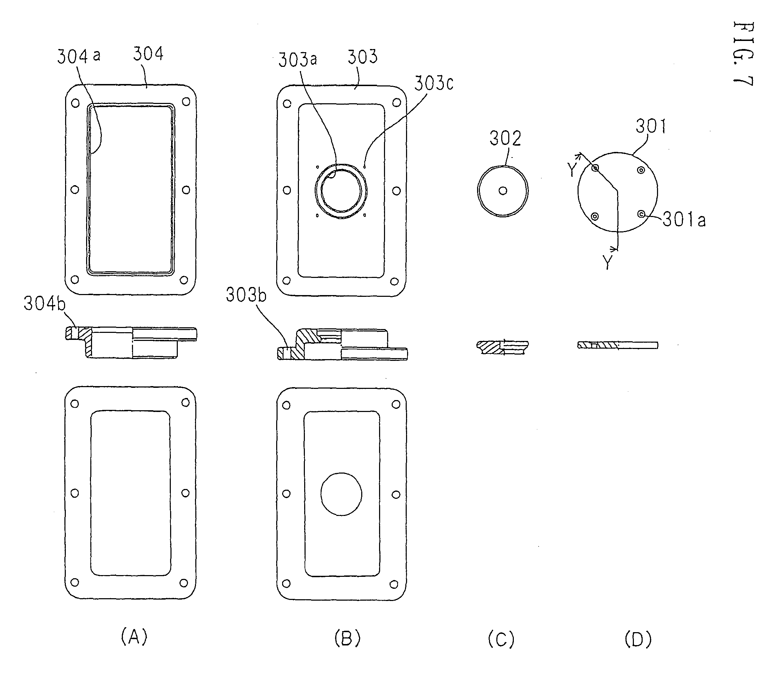

With reference in particular to FIGS. 4 to 7, a method for producing the hollow fiber membrane module according to the example of the invention is described. FIG. 4 is a partially cutaway sectional view illustrating a state that the hollow fiber membrane module according to the example of the invention is fitted to a jig when the module is viewed from the front thereof. In FIG. 4, the upper half is a front view, and the lower half is a sectional view. FIG. 5 is a plan view illustrating a state that the hollow fiber membrane module according to the example of the invention is fitted to the jig. FIGS. 6 and 7 are views illustrating parts constituting the jig used in the production of the hollow fiber membrane module according to the example of the invention. In FIGS. 6 and 7, the upper views are plan views and the lower views are bottom views. Bottom views of some of the parts are omitted. In the middle in FIG. 6 and that in FIG. 7, partially cutaway sectional views are illustrated (the left half in each of the views is a sectional view, and the right half therein is a front view).

### <<Jig Used in the Production>>

First, the jig used in the method for producing the hollow fiber membrane module according to the present example is described. In the example, a first jig unit 200 and a second jig unit 300 are used in the production.

As illustrated in FIGS. 4 to 6, the first jig unit 200 is composed of an outer lid 201 (details thereof are illustrated in FIG. 6(A)), an inner lid 202 (details thereof are illustrated in FIG. 6(B)), an outer frame 203 (details thereof are illustrated in FIG. 6(C)), a middle frame 204 (details thereof are illustrated in FIG. 6(D)), and an inner frame 205 (details thereof are illustrated in FIG. 6(E)). Through holes 204a and 205a, each of which is substantially rectangular, are provided in the middle frame 204 and the inner frame 205, respectively. A step is provided in an inner wall face of the middle frame 204 (see FIG. 4), and about the through hole 204a, the lengthwise and lateral dimensions thereof are larger at the side of the inner frame 205 than at the side of the outer frame 203. A through hole 203a is provided in the outer frame 203 also. This through hole 203a is circular at the outside, and is substantially rectangular at the inside. The shape and the size of the opening end face at the inside in the through hole 203a are provided equal to the shape and the size of the opening end face at the outside in the through hole 204a provided in the middle frame 204. In the circular portion out of entire portions of the through hole 203a, a step is provided so as to make the outside thereof into a large diameter and make the inside thereof into a small diameter. The inner lid 202 is in a substantially cylindrical form having a step between its small diameter portion and its large diameter portion, and is constructed to be fitted into the circular portion out of entire portions of the through hole 203a provided in the outer frame 203. The outer lid 201 is in a disk form, and the diameter thereof is made larger than the large diameter portion of the inner lid 202.

Plural (six) screw holes 203b, 204b and 205b are provided in the outer frame 203, the middle frame 204, and the inner frame 205, respectively, so as to make their central axes consistent with each other. Plural (four) screw holes 203c and 201a are provided in the outer frame 203 and the outer lid 201, respectively, so as to make their central axes consistent with each other. In the inner frame 205 is provided an injecting opening 205c, through which a seal-fixing material (a resin changeable from liquid to solid, for example, epoxy resin) for forming the seal-fixing sections should be injected.

When screws 206 are inserted into the screw holes 203b, 204b and 205b at the six positions in a state that the outer frame 203, the middle frame 204 and the inner frame 205 are put into piles, the outer frame 203, the middle frame 204 and the inner frame 205 are fixed. The screws 206 exhibits a function of making the screw holes 12b in the first seal-fixing section 12 as well as a function of fixing the outer frame 203, the middle frame 204 and the inner frame 205. In a state that the inner lid 202 is fitted to the circular portion out of entire portions of the through hole 203a in the outer frame 203, the outer lid 201 is put on top thereof, and then screws not illustrated are inserted into the screw holes 201a and 203c at the four points. In this way, the outer frame 203, the outer lid 201 and the inner lid 202 are fixed. As described above, the first jig unit 200 is constructed.

As illustrated in FIGS. 4, 5 and 7, the second jig unit 300 is composed of an outer lid 301 (details thereof are illustrated in FIG. 7 (D)), an inner lid 302 (details thereof are illustrated in FIG. 7 (C)), an outer frame 303 (details thereof are illustrated in FIG. 7 (B)), and an inner frame 304 (details thereof are illustrated in FIG. 7(A)). A substantially rectangular through hole 304a is provided in the inner frame 304. Moreover, a through hole 303a is provided in the outer frame 303 also. This through hole 303a is circular at the outside, and is substantially rectangular at the inside. The shape of the opening end face at the inside in this through hole 303a is resemble to the shape of the opening end face at the outside in the through hole 304a provided in the inner frame 304. About the sizes thereof, the size at the side of the inner frame 304 is made larger. A step is provided in the circular portion out of entire portions of the through hole 303a to make the outside into a large diameter and make the inside into a small diameter. The inner lid 302 is in a substantially cylindrical form having a step between its small diameter portion and its large diameter portion, and is constructed to be fitted into the circular portion out of entire portions of the through hole 303a provided in the outer frame 303. The outer lid 301 is in a disk form, and the diameter thereof is made larger than the large diameter portion of the inner lid 302.

Plural (six) screw holes 303b, and 304b are provided in the outer frame 303 and the inner frame 304, respectively, so as to make their central axes consistent with each other. Plural (four) screw holes 303c and 301a are provided in the outer frame 303 and the outer lid 301, respectively, so as to make their central axes consistent with each other. In the inner frame 304 is provided an injecting opening 304c, through which a seal-fixing material (a resin changeable from liquid to solid, for example, epoxy resin) for forming the seal-fixing sections should be injected.

When screws 305 are inserted into the screw holes 303b and 304b at the six positions in a state that the outer frame 303 and the inner frame 304 are put into piles, the outer frame 303 and the inner frame 304 are fixed. In a state that the inner lid 302 is fitted to the circular portion out of entire portions of the through hole 303a in the outer frame 303, the outer lid 301 is put on top thereof. Screws not illustrated are then inserted into the screw holes 301a and 303c at the four points. In this way, the outer frame 303, the outer lid 301 and the inner lid 302 are fixed. As described above, the second jig unit 300 is constructed.

### <<Production Steps>>

The following will describe a method for producing the hollow fiber membrane module according to the example of the invention along the order of production steps therein.

First, the plural hollow fiber membranes 11 are provided into a bundle, and the mesh 14 is wound around the hollow fiber membrane bundle. The mesh 14 is a member set up so as to cause the hollow fiber membranes 11 not to be separated from each other and further so as to restrain the hollow fiber membranes 11 from being vibrated so that base portions (the boundary portions adjacent to the seal-fixing sections) of the hollow fiber membranes 11 will not be cut.

Next, both ends of the hollow fiber membrane bundle are fitted to the first jig unit 200 and the second jig unit 300, respectively. A liquid seal-fixing material is injected from the injecting opening 205c provided in the inner frame 205, so that the seal-fixing material is filled into the first j igunit 200. The liquid seal-fixing material is injected from the injecting opening 304c provided in the inner frame 304 also, so that the seal-fixing material is filled into the second jig unit 300 also. After the seal-fixing material is filled, the material is hardened to turn into a solid. As described above, the outward flange 12a of the first seal-fixing section 12 can be formed by means of the step provided in the inner wall face of the middle frame 204. The filling of the seal-fixing material can be attained by use of a centrifuge. The method for filling the seal-fixing material by use of a centrifuge is known; thus, details thereof will not be described. In the present example, each of the first jig unit 200 and the second jig unit 300 is fixed to a centrifuge, and then the seal-fixing material is injected to the unit to which centrifugal force is to be applied, whereby the seal-fixing material can be filled into one of the end portions. In this case, it is necessary that after the seal-fixing material is filled into one of the end portions and the material is hardened, the seal-fixing material is filled into the other end portion.

After the seal-fixing material is hardened to turn into a solid, the hollow fiber membrane bundle, both ends of which are seal-fixed, is taken off from the first jig unit 200 and the second jig unit 300. The method for taking off this hollow fiber membrane bundle is described. The screws not illustrated, out of the constituting members of the first jig unit 200, are removed, thereby taking off the outer lid 201 from the outer frame 203. The inner lid 202 is also taken off. In this way, one of the end portions of the hollow fiber membrane bundle is partially made uncovered. This uncovered portion is pushed against the first jig unit 200, whereby the hollow fiber membrane bundle can be taken off from the first jig unit 200. In the same manner as about the second jig unit 300, the outer lid 301 and the inner lid 302 are taken off. The uncovered portion in the other end portion of the hollow fiber membrane bundle is pushed against the second jig unit 300, whereby the hollow fiber membrane bundle can be taken off from the second jig unit 300. In this way, the portions wherein the seal-fixing material is hardened and solidified are pushed against the jigs, thereby taking off the hollow fiber membrane bundle from the jigs so as to prevent tensile stress from acting onto the hollow fiber membranes 11. It is therefore possible to prevent the hollow fiber membranes 11 from being elongated or cut when the hollow fiber membrane bundle is taken off.

After the hollow fiber membrane bundle is taken off, the seal-fixed portions are partially cut, thereby finishing the hollow fiber membrane unit 10. When the seal-fixed portions are partially cut, the insides of the hollows are made open at both ends of each of the hollow fiber membranes. In FIG. 4, C1 and C2 represent portions to be cut.

Thereafter, the hollow fiber membrane unit 10 is put into the body section 21 of the housing 20. As described above, the first cap 22 and the second cap 23 are fixed to both ends of the body section 21, respectively, thereby completing the hollow fiber membrane module 100.

### BRIEF DESCRIPTION OF THE DRAWINGS

FIG. 1 is a plan view of a hollow fiber membrane module according to an example of the present invention;
FIG. 2 is a partially cutaway sectional view of the hollow fiber membrane module according to the example of the invention when the module is viewed from the front thereof;
FIGS. 3 are each a view which schematically illustrates the flowing manner of a fluid in a housing;
FIG. 4 is a partially cutaway sectional view illustrating a state that the hollow fiber membrane module according to the example of the invention is fitted to a jig when the module is viewed from the front thereof;
FIG. 5 is a plan view illustrating a state that the hollow fiber membrane module according to the example of the invention is fitted to the jigs;
FIGS. 6 are views illustrating parts constituting the jig used in the production of the hollow fiber membrane module according to the example of the invention;
FIGS. 7 are views illustrating parts constituting the jig used in the production of the hollow fiber membrane module according to the example of the invention;
FIG. 8 is a schematic sectional view of a hollow fiber membrane module in the conventional art; and
FIG. 9 is a schematic sectional view of a hollow fiber membrane module in the conventional art.

### EXPLANATION OF REFERENCE NUMERALS

- 10: Hollow fiber membrane unit
- 11: Hollow fiber membranes
- 12: First seal-fixing section
- 12a: Outward flange
- 12b: Screw holes
- 13: Second seal-fixing section
- 13b: Step
- 14: Mesh
- 20: Housing
- 21: Body section
- 21a and 21b: Second ports
- 21c and 21d: Outward flanges
- 22: First cap
- 22a: First port
- 22b: Outward flange
- 23: Second cap
- 23a: First port
- 23b: Outward flange
- 31 and 32: Screws
- 41, 42, 43 and 44: Seal rings
- 100: Hollow fiber membrane module
- 200: First jig unit
- 201: Outer lid
- 201a: Screw holes
- 202: Inner lid
- 203: Outer frame
- 203a: Through hole
- 203b and 203c: Screw holes
- 204: Middle frame
- 204a: Through hole
- 204b: Screw holes
- 205: Inner frame
- 205a: Through hole
- 205b: Screw holes
- 205c: Injecting opening
- 206: Screws
- 300: Second jig unit
- 301: Outer lid
- 301a: Screw holes
- 302: Inner lid
- 303: Outer frame
- 303a: Through hole
- 303b and 303c: Screw holes
- 304: Inner frame
- 304a: Through hole
- 304b: Screw holes
- 304c: Injecting opening
- 305: Screws

## Claims

1. A hollow fiber membrane module, comprising a hollow fiber membrane unit which has plural hollow fiber membranes, and a seal-fixing section for seal-fixing both ends of the hollow fiber membranes to make the insides of the hollows therein open, and which is constructed in a state that an outer wall face of the seal-fixing section is uncovered, and
a housing for containing the hollow fiber membrane unit,
wherein the housing has a first port constituting a channel leading to the insides of the hollows in the hollow fiber membranes, and a second port constituting a channel leading to the side of an outer wall face of the hollow fiber membranes, and
the hollow fiber membrane unit is constructed to be able to put on and taken off from the housing.

2. A hollow fiber membrane module according to claim 1, wherein the seal-fixing section is fitted to the internal circumference of the housing, so as to be fixed.

3. A hollow fiber membrane module according to claim 1, wherein the housing has a body section having an outward flange, and a cap having an outward flange,
the seal-fixing section has an outward flange sandwiched between the outward flange of the body section and the outward flange of the cap, and
the individual outward flanges in the body section, the seal-fixing section, and the cap are fixed to each other with a screw.

4. A hollow fiber membrane module according to claim 1, 2, or 3, wherein the shape of the housing is substantially rectangularly parallelepipedic,
an input and an outlet constituting the first port are provided in a pair of opposite faces of the housing, respectively, and further an input and an outlet constituting the second port are provided in a pair of other opposite faces of the housing, which are different from the faces in which the first port is provided, respectively.

5. A method for producing a hollow fiber membrane module, comprising:
the step of making plural hollow fiber membranes into a bundle, and fitting ends of the hollow fiber membrane bundle to a jig for covering the ends,
the step of pouring a liquid resin material into the jig,
the step of taking out the hollow fiber membrane bundle from the jig after the resin material is hardened,
the step of cutting the hardened resin material of the hollow fiber membrane bundle partially, thereby forming a hollow fiber membrane unit having a seal-fixing section for seal-fixing the hollow fiber membranes to each other while making the inside of the hollow in each of the hollow fiber membranes open, and
the step of putting the hollow fiber membrane unit into a housing which has a first port for constituting a channel leading to the insides of the hollows in the hollow fiber membranes, and a second port for constituting a channel leading to the side of an outer wall face of the hollow fiber membranes, and which the hollow fiber membrane unit can be put on and taken off from.

6. A method for producing a hollow fiber membrane module according to claim 5, wherein the jig has a lid for making a part of the ends of the hollow fiber membrane bundle uncovered, and
after the resin material is hardened, the lid is taken off, thereby pushing the end of the uncovered hollow fiber membrane bundle, thereby taking off the hollow fiber membrane bundle from the jig.
